# EUROPEAN PATENT SPECIFICATION

(11) **EP 2 634 719 B1**
(45) Date of publication and mention of the grant of the patent: **28.03.2018**
(21) Application number: 13152924.0
(22) Date of filing: 01.12.2008
(51) Int. Cl.: H04L 29/06, G06F 21/32, G06F 21/34

(54) **System and method of providing biometric quick launch**
System und Verfahren zur Bereitstellung von Biometrieschnellstart
Système et procédé pour la fourniture d'un lancement biométrique rapide

(43) Date of publication of application: 04.09.2013
(62) Divisional of application: 08170378.7
(73) Proprietor: BlackBerry Limited, Waterloo, ON N2K 0A7 (CA)
(72) Inventor: Davis, Dinah Lea Marie, Waterloo, Ontario N2L 5Z5 (CA); Adams, Neil P., Waterloo, Ontario N2L 5Z5 (CA)
(74) Representative: Gill Jennings & Every LLP

(56) References cited:
- EP-A1- 0 763 791
- US-A1- 2005 169 503
- US-A1- 2006 031 289
- US-A1- 2006 288 182
- US-A1- 2007 195 998
- US-A1- 2008 016 371
- US-B1- 6 721 891
- US-B1- 7 136 514
- "Getting Started. Microsoft Fingerprint Reader", , 19 May 2004 (2004-05-19), XP055072102, Retrieved from the Internet: URL:download.microsoft.com/download/1/3/9/ .../Fingerprint_Reader.pdf‎ [retrieved on 2013-07-19]
- "ThinkVantage Deployment Guide", , 31 May 2006 (2006-05-31), pages 1-18, XP055072003, Retrieved from the Internet: URL:http://download.lenovo.com/ibmdl/pub/p c/pccbbs/thinkcentre_pdf/rr30mst.pdf [retrieved on 2013-07-18]
- Terry W. Ogletree: "Windows XP: Unleashed" In: "Windows XP: Unleashed", 1 December 2001 (2001-12-01), Sams Publishing, XP055071160, ISBN: 978-0-67-232280-8 pages 122-129,

## Description

The present application relates generally to launching applications on a device and, more particularly, to a system and method of launching applications, access to which is controlled, at least in part, by biometric authentication.

As an increasing volume of sensitive personal information is stored on computers, personal and otherwise, it is increasingly important that access to these computers is controlled. Even the most basic user of computers is familiar with a requirement to provide a password to gain access to a computer and execute various software application on the processor of the computer. Such a one-factor authentication scheme is based solely on what the user knows, i.e., the password. Should the password become known to those other than the user whose account access to which is controlled by the password, the others can use the password to gain access to the user's account.

To increase security, some computers have been configured to implement a two-factor authentication scheme. The user is provided with a smart card and a smart card reader that may connect to the computer of interest either by wired means or wireless means. The smart card may have an associated password previously revealed to the user. Now, to gain access to the computer of interest, the user provides a first password, which may be called a device password, and a second password, which may be called a smart card password. The user will only gain access to the computer of interest by submitting correct values for both the device password and the smart card password. The computer generally determines whether the provided smart card is a correct value by passing the provided smart card password to the smart card reader and receiving a yes or no answer. Such a two-factor authentication scheme is based on what the user knows, i.e., the device password and the smart card password, and what the user has, i.e., the smart card, since the computer of interest can not confirm the validity of the provided smart card password in the absence of the smart card.

To increase security even further, some computers have been configured to implement an additional authentication scheme. The additional factor is biometric information. Biometric information includes fingerprints, retinal scans, face geometry scans, hand geometry scans, voice or speech prints, etc. In one particular implementation, the smart card reader can also have a biometric input device. Now, to gain access to the computer of interest, the user provides a device password and a smart card password. If the passwords are determined to be valid, the user is prompted to provide biometric information. The user will only gain access to the computer of interest if the biometric information submitted responsive to the prompt properly matches a previously established and stored version of the biometric information. Incorporating the above-described factors, a three-factor authentication scheme may be based on what the user knows, i.e., the device password and the smart card password, what the user has, i.e., the smart card, and something that is unique to the user, e.g., a fingerprint. Accordingly, even if the smart card falls into the hands of a nefarious person who also gains knowledge of the device password and the smart card password, the lack of the correct biometric data should keep the nefarious person from gaining access to the computer of interest.

"Getting Started. Microsoft Fingerprint Reader", 19 May 2004, "ThinkVantage Deployment Guide", 31 May 2006, Terry W. Ogletree: "Windows XP: Unleashed" In: "Windows XP: Unleashed", 1 December 2001 (2001-12-01), Sams Publishing, ISBN: 978-0-67-232280-8 pages 122-129, United States Patent application publication numbers US 2006,031289 A1, US 2008/016371 A1, US 2007/195998 A1, US 2006/288182 A1 and US 2005/169503 A1, United States patent numbers US 7 136 514 B1 and US 6 721 891 B1 and European patent application publication number EP 0 763 791 A1 all disclose background art.

### GENERAL

By providing a biometric candidate to a biometric input device, a user may cause a computing device to be unlocked and cause a specific application to be launched on the computing device. The biometric input device may be on the computing device or on a peripheral security device that is in communication with the computing device. Indeed, the specific application may be launched pre-loaded with certain data, selection of which data is controlled by the particular biometric provided to the biometric input device.

Aspects of the invention are set out in the appended claims.
Other aspects and features of the present invention will become apparent to those of ordinary skill in the art upon review of the following description of specific embodiments of the invention in conjunction with the accompanying figures.

### BRIEF DESCRIPTION OF THE DRAWINGS

Reference will now be made to the drawings, which show by way of example, embodiments of the invention, and in which:
FIG. 1 shows in block diagram form a communication system suitable for a smart card reader and mobile communication device in accordance with one embodiment;
FIG. 2 shows an operational block representation of the mobile communication device of FIG. 1 according to one embodiment;
FIG. 3 shows an operational block representation of an embodiment of the smart card reader of FIG. 1;
FIG. 4 illustrates steps in an example method of maintaining secure access to the mobile communication device of FIG. 1;
FIG. 5 illustrates steps in an example method of launching execution of an application on the mobile communication device of FIG. 1 through the provision of biometric data and passwords according to an embodiment; and
FIG. 6 illustrates steps in an example method of launching execution of an application on the mobile communication device of FIG. 1 through the provision of biometric data according to another embodiment.

### DESCRIPTION OF PREFERRED EMBODIMENTS

While three-factor authentication is secure, three-factor authentication may be considered time consuming to employ every time access to the computer of interest is desired. It is clear that any gains in efficiency in accomplishing the task for which access to the computer is desired would be welcome.

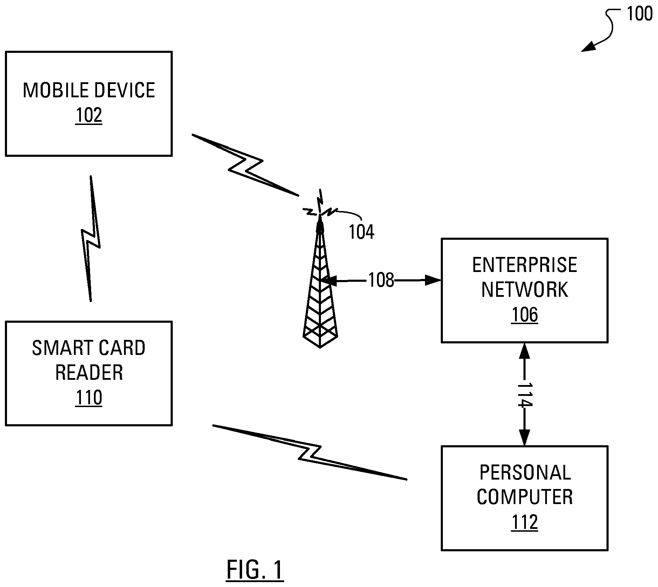

Reference is first made to FIG. 1, which shows an illustrative communication system 100 to which embodiments described herein can be applied. The system 100 includes one or more mobile communication devices 102 (only one of which is shown in FIG. 1) that are enabled to communicate with one or more wireless networks 104 (only one of which is shown in FIG. 1). In other embodiments, the mobile communication devices 102 may be replaced by or augmented with desktop personal computers, notebook computers, palmtop computers, etc. The wireless network 104 may be implemented as a packet-based cellular wide area wireless network that includes a number of base stations each providing wireless Radio Frequency (RF) coverage to a corresponding area or cell. In some embodiments, instead of, or in addition to, a wide area wireless network, the wireless network 104 may include a local wireless area network, such as for example a wireless local area network that conforms to Institute of Electrical and Electronics Engineers (IEEE) 802.11 standards such as 802.11b and/or 802.11g. In at least some example embodiments, the wireless network 104 is connected to one or more enterprise networks 106 (only one of which is shown in FIG. 1). The connection between the wireless network 104 and the enterprise network 106 may involve an intermediate communications link 108, which may pass through additional networks including, for example, the Internet. The enterprise network 106 may be associated with the illustrated mobile device 102, such that the mobile device 102 is enabled to exchange electronic messages and other information with the enterprise network 106. Optionally, the mobile device 102 may be associated with a secondary mobile device in the form of a smart card reader 110. Additionally, a user of the mobile device 102 and the smart card reader 110 is likely to have access to a personal computer 112 that is connected to the enterprise network 106 over a communications link 114. In one embodiment, the communications link 114 is a local area network or wide area network providing organizational connectivity with the enterprise network 106. The smart card reader 110 may also be used with the personal computer 112, through either a wired or wireless connection.

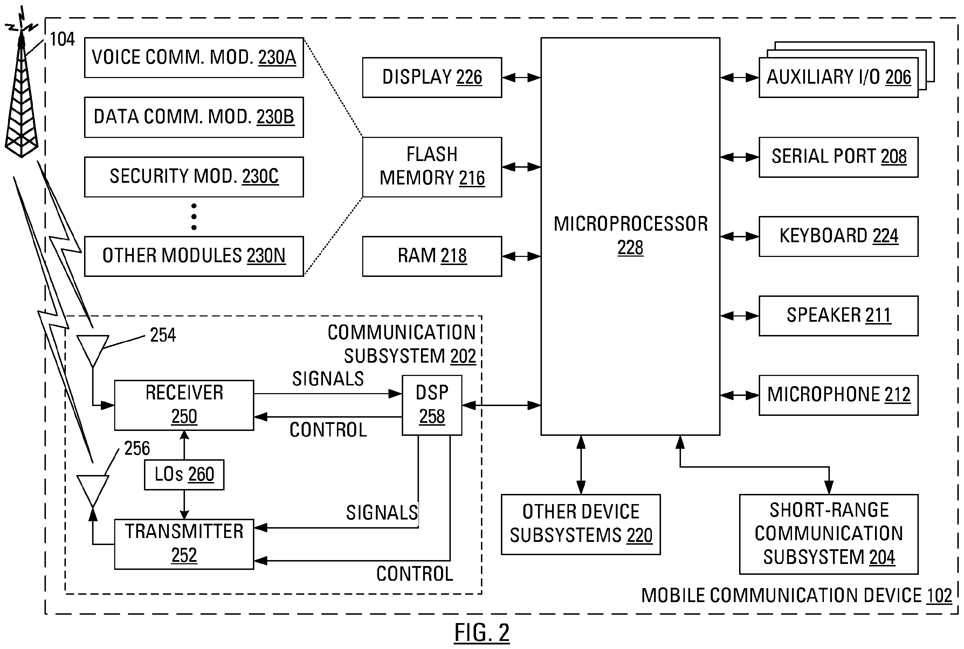

FIG. 2 illustrates the mobile communication device 102 as an example of a device that may be employed in the illustrative communication system 100 of FIG. 1. The mobile communication device 102 includes a housing, an input device (e.g., a keyboard 224 having a plurality of keys) and an output device (a display 226), which may be a full graphic, or full color, Liquid Crystal Display (LCD). Other types of output devices may alternatively be utilized. A processing device (a microprocessor 228) is shown schematically in FIG. 2 as coupled between the keyboard 224 and the display 226. The microprocessor 228 controls the operation of the display 226, as well as the overall operation of the mobile communication device 102, in part, responsive to actuation of the keys on the keyboard 224 by a user. Notably, the keyboard 224 may comprise physical buttons (keys) or, where the display 226 is a touchscreen device, the keyboard 224 may be implemented, at least in part, as "soft keys". Actuation of a so-called soft key involves either touching the display 226 where the soft key is displayed or actuating a physical button in proximity to an indication, on the display 226, of a temporary action associated with the physical button.

The housing may be elongated vertically, or may take on other sizes and shapes (including clamshell housing structures). Where the keyboard 224 includes keys that are associated with at least one alphabetic character and at least one numeric character, the keyboard 224 may include a mode selection key, or other hardware or software, for switching between alphabetic entry and numeric entry.

In addition to the microprocessor 228, other parts of the mobile communication device 102 are shown schematically in FIG. 2. These include: a communications subsystem 202; a short-range communications subsystem 204; the keyboard 224 and the display 226, along with other input/output devices including a set of auxiliary I/O devices 206, a serial port 208, a speaker 210 and a microphone 212; as well as memory devices including a flash memory 216 and a Random Access Memory (RAM) 218; and various other device subsystems 220. The mobile communication device 102 may be a two-way radio frequency (RF) communication device having voice and data communication capabilities. In addition, the mobile communication device 102 may have the capability to communicate with other computer systems via the Internet.

Operating system software executed by the microprocessor 228 may be stored in a computer readable medium, such as the flash memory 216, but may be stored in other types of memory devices, such as a read only memory (ROM) or similar storage element. In addition, system software, specific device applications, or parts thereof, may be temporarily loaded into a volatile store, such as the RAM 218. Communication signals received by the mobile device may also be stored to the RAM 218.

The microprocessor 228, in addition to its operating system functions, enables execution of software applications on the mobile communication device 102. Executable code for a predetermined set of software applications that control basic device operations, such as a voice communications module 230A and a data communications module 230B, may be installed on the mobile communication device 102 during manufacture. A security module 230C may also be installed on the mobile communication device 102 during manufacture, to implement aspects of the present application. As well, additional software modules, illustrated as an other software module 230N, which may be, for instance, a PIM application, may be installed during manufacture. The PIM application may be capable of organizing and managing data items, such as e-mail messages, calendar events, voice mail messages, appointments and task items. The PIM application may also be capable of sending and receiving data items via the wireless network 104 represented by a radio tower. The data items managed by the PIM application may be seamlessly integrated, synchronized and updated via the wireless network 104 with the device user's corresponding data items stored or associated with a host computer system.

Communication functions, including data and voice communications, are performed through the communication subsystem 202 and, possibly, through the short-range communications subsystem 204. The communication subsystem 202 includes a receiver 250, a transmitter 252 and one or more antennas, illustrated as a receive antenna 254 and a transmit antenna 256. In addition, the communication subsystem 202 also includes a processing module, such as a digital signal processor (DSP) 258, and local oscillators (LOs) 260. The specific design and implementation of the communication subsystem 202 is dependent upon the communication network in which the mobile communication device 102 is intended to operate. For example, the communication subsystem 202 of the mobile communication device 102 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), etc. Other types of data and voice networks, both separate and integrated, may also be utilized with the mobile communication device 102.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex™ networks, mobile devices are registered on the network using a Mobitex Access Number (MAN) associated with each device and in DataTAC™ networks, mobile devices are registered on the network using a Logical Link Identifier (LLI) associated with each device. In GPRS networks, however, network access is associated with a subscriber or user of a device. A GPRS device therefore uses a subscriber identity module, commonly referred to as a Subscriber Identity Module (SIM) card, in order to operate on a GPRS network. Despite identifying a subscriber by SIM, mobile devices within GSM/GPRS networks are uniquely identified using an International Mobile Equipment Identity (IMEI) number.

When required network registration or activation procedures have been completed, the mobile communication device 102 may send and receive communication signals over the wireless network 104. Signals received from the wireless network 104 by the receive antenna 254 are routed to the receiver 250, which provides for signal amplification, frequency down conversion, filtering, channel selection, etc., and may also provide analog to digital conversion. Analog-to-digital conversion of the received signal allows the DSP 258 to perform more complex communication functions, such as demodulation and decoding. In a similar manner, signals to be transmitted to the wireless network 104 are processed (e.g., modulated and encoded) by the DSP 258 and are then provided to the transmitter 252 for digital to analog conversion, frequency up conversion, filtering, amplification and transmission to the wireless network 104 (or networks) via the transmit antenna 256.

In addition to processing communication signals, the DSP 258 provides for control of the receiver 250 and the transmitter 252. For example, gains applied to communication signals in the receiver 250 and the transmitter 252 may be adaptively controlled through automatic gain control algorithms implemented in the DSP 258.

In a data communication mode, a received signal, such as a text message or web page download, is processed by the communication subsystem 202 and is input to the microprocessor 228. The received signal is then further processed by the microprocessor 228 for output to the display 226, or alternatively to some auxiliary I/O devices 206. A device user may also compose data items, such as e-mail messages, using the keyboard 224 and/or some other auxiliary I/O device 206, such as a touchpad, a rocker switch, a thumb-wheel, a trackball, a touchscreen, or some other type of input device. The composed data items may then be transmitted over the wireless network 104 via the communication subsystem 202.

In a voice communication mode, overall operation of the device is substantially similar to the data communication mode, except that received signals are output to a speaker 210, and signals for transmission are generated by a microphone 212. Alternative voice or audio I/O subsystems, such as a voice message recording subsystem, may also be implemented on the mobile communication device 102. In addition, the display 226 may also be utilized in voice communication mode, for example, to display the identity of a calling party, the duration of a voice call, or other voice call related information.

The short-range communications subsystem 204 enables communication between the mobile communication device 102 and other proximate systems or devices, which need not necessarily be similar devices. For example, the short-range communications subsystem 204 may include an infrared device and associated circuits and components, or a Bluetooth™ communication module to provide for communication with similarly-enabled systems and devices. For example, the smart card reader 110 may be enabled to communicate with the mobile device 102 by way of the short-range communications subsystem 204.

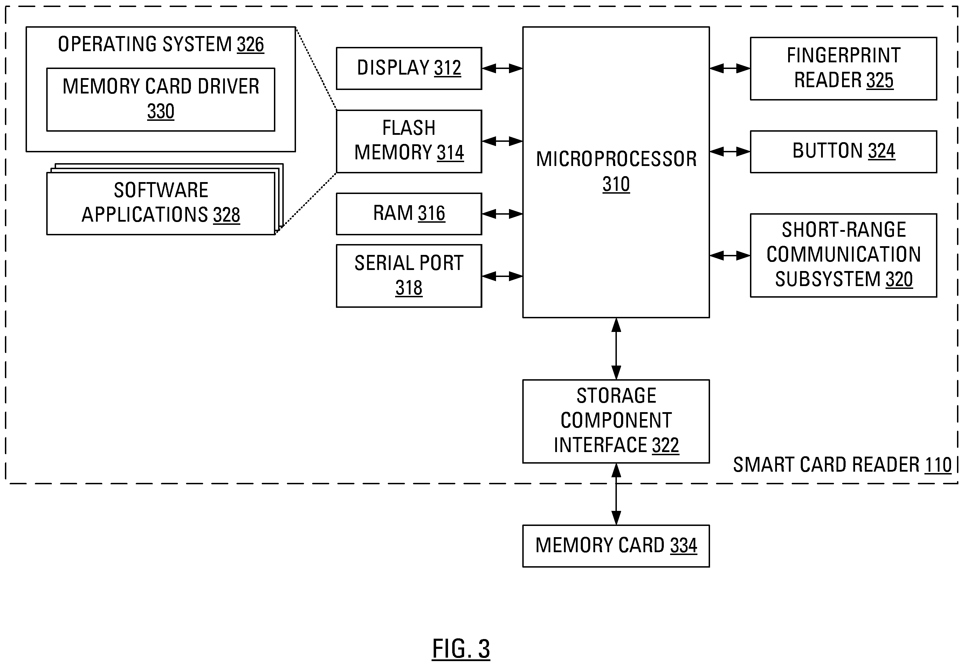

Reference is next made to FIG. 3, which shows, in greater detail, an example embodiment of a secondary mobile device, namely the smart card reader 110. The smart card reader 110 includes a controller including at least one microprocessor 310, which is suitably programmed to control the overall operation and functions of the smart card reader 110, and an output device (e.g., a display module 312). The smart card reader 110 further includes peripheral devices or subsystems such as a flash memory 314, a random access memory (RAM) 316, a serial port 318 (e.g., a USB port), a short-range communications subsystem 320 (e.g., an infrared transceiver, wireless bus protocol such as a Bluetooth system or any other means of local communications), a storage component interface 322 (e.g., for a memory card or any other data storage device), a user input device 324 (e.g., a push button), and a biometric information input device 325 (e.g., a fingerprint sensor).

A fingerprint sensor generally comprises an electronic device used to capture a digital image of a fingerprint pattern. The captured digital image is called a live scan. As part of configuring a fingerprint access system, a live scan may be digitally processed to create a biometric template, which is stored and used for later matching. A future live scan may be similarly digitally processed to create a biometric candidate in a format that facilitates matching with the previously captured and stored biometric template. Some of the more commonly used fingerprint sensor technologies include: optical; ultrasonic; and capacitance.

One example fingerprint sensor has a bar shape. A silicon sensor constructs a fingerprint as a user swipes a finger across the bar. Another example fingerprint sensor has a pad shape. A sensor constructs a fingerprint as a user holds a finger on the pad, which is designed with a size to accommodate an entire fingerprint.

The microprocessor 310 operates under stored program control with code or firmware being stored in the flash memory 314 (or other type of non-volatile memory device or devices). As depicted in FIG. 3, the stored programs include an operating system program or code module 326 and other programs or software applications indicated generally by reference 328. The operating system 326 of the smart card reader 110 further includes a memory card driver component 330. The memory card driver 330 is responsible for coordinating communications between the smart card reader 110 and a memory card 334 and/or between the smart card reader 110 and related drivers of a device to be used in conjunction with the smart card reader 110, such as the drivers 244 of the personal computer 112. The operating system code 326, code for specific software applications 328, code for the memory card driver 330, or code components thereof, may be temporarily loaded into a volatile storage medium such as the RAM 316. Received communication signals and other data with information may also be stored in the RAM 316. Additionally, the storage component interface 322 receives the removable memory card 334, providing additional storage space for the smart card reader 110. In one embodiment, the memory card 334 may be a smart card similar to the smart cards known to those skilled in the art. The memory card 334 may include fingerprint authentication data, password or pin code related data, or other security related data. While operation of the smart card reader 110 is described using a smart card, it will be understood by those skilled in the art that the smart card reader 110 may be designed using any suitable form of removable media without departing from the intended scope of the smart card reader 110.

The stored program control (e.g., operating system 326, software applications 328) for the microprocessor 310 also includes a predetermined set of applications or code components or software modules that control basic device operations, for example, management and security related control of the data of the smart card reader 110 and may be installed on the smart card reader 110 as a component of the software applications 328 during the manufacturing process. Further applications may also be loaded (i.e., downloaded) onto the smart card reader 110 through the operation of the serial port 318, the operation of the short-range communications subsystem 320 or from the smart card 334. The downloaded code module or components are then installed by the user (or automatically) in the non-volatile program memory (e.g., the flash memory 314) or the RAM 316.

The serial port 318 may comprise a USB-type interface port for interfacing or synchronizing with another device, such as the personal computer 112 or the mobile device 102. The serial port 318 is used to exchange data with a device such as the personal computer 112 to be stored on the smart card 334 that is plugged into the storage component interface 322 of the smart card reader 110. The serial port 318 is also used to extend the capabilities of the smart card reader 110 by providing for information or software downloads, including any user interface information, to the smart card reader 110.

In various example embodiments, the short-range communications subsystem 320 provides an interface for communication between the smart card reader 110 and the personal computer 112 or the mobile device 102. In one embodiment, the short-range communications subsystem 320 includes an infrared communication link or channel. In another embodiment, the subsystem 320 comprises a wireless RF bus protocol such as a Bluetooth™ communications subsystem. However, the short-range communications subsystem 320 may comprise any suitable local wireless means of communication, so long as the short range communications subsystem 232 of the personal computer 112 is chosen to operate using the same protocol, which may for example facilitate wireless communication between the personal computer 112 and the smart card reader 110. Any suitable communications mechanism and/or protocol may be implemented for the short range communications subsystems 320 and 204.

In information technology, biometric authentication refers to technologies that measure and analyze human physical and behavioral characteristics for authentication purposes. Examples of physical characteristics include fingerprints, eye retinas and irises, facial patterns and hand measurements, while examples of mostly behavioral characteristics include signature, gait and typing patterns. Voice is considered a mix of both physical and behavioral characteristics. However, it can be argued that all biometric traits share physical and behavioral aspects.

The use of a biometric authentication system begins with the collection and storage of template biometrics from potential users of the biometric authentication system. At the time of desired authentication, the user inputs, to a device (or to a peripheral to the device), a "candidate" biometric. Matching algorithms are then used to compare previously stored template biometrics against the candidate biometric. In the case where the biometric is an image, an original image (template) may be directly compared with a candidate image. Alternatively, formation of the template involves identifying certain features of an original image. Once the features are identified, the template may be formed of location and orientation information for each of the features. Similarly, a candidate is formed by identifying certain features of a candidate image and, subsequently, the template is compared to the candidate.

In one application, biometric authentication may be used for authenticating the user of a mobile communication device.

In some enhanced security embodiments, in order for a user to use some or all of the functionality of the mobile device 102, the mobile device 102 must be in at least periodic communication with its associated smart card reader 110 through the mobile device short-range communications system 204 to receive authorization information stored on the memory card 334. The authorization information stored on the memory card 334 will typically include unique authentication information for a designated user of the mobile device 102, such as biometric templates and/or further authentication information such as passwords, etc. Such a configuration mitigates against unauthorized use when the mobile device 102 becomes separated (i.e., out of communications range) from the smart card reader 110 with which the mobile device 102 has been paired. According to example embodiments, in addition to providing enhanced security functionality, the smart card reader 110 is also used to backup data from the mobile device 100.

The auxiliary I/O devices 206 of the mobile device 102 may include "convenience keys". Such convenience keys may be positioned at specific locations about the housing of the mobile device 102. In operation, the convenience keys may each be mapped to a function. For instance, actuation of one convenience key may launch a web browsing application on the mobile device 102. Actuation of another convenience key may cause a menu to appear on the display 226, where the menu allows the user to select a notification profile different from the notification profile currently in use. As is known, a notification profile may be used to define a manner in which the mobile device 102 notifies the user of various events. The events may include an incoming telephone call, a recently received e-mail message, a recently received Short Messaging Service message, a recently received Instant Messaging message, an alert that an appointment time is imminent, a reminder of a due task, etc. One profile may be used in noisy environments and may be defined such that the user is alerted using a combination of loud noises and vibrations. Additionally, another profile may be used in quiet environments and may be defined such that a user is not alerted at all.

Through the use of convenience keys, execution of specific applications can be launched by a single action, e.g., a key press on a convenience key, rather than a series of actions, e.g., an actuation to bring up the display of a menu, an actuation to scroll through the menu to find a menu item associated with the desired application and a further actuation to select the desired application.

Many people opt for a holster to hold the handheld computing device in a manner that allows the handheld computing device and holster combination to be attached to a belt around the waist of the user or attached to the outside of a bag.

Typical components of a handheld computing device include an output device, such as a display screen, an input device, such as a keypad, and a battery, to allow operation away from fixed power sources. To minimize power use, many handheld computing devices have been designed to sense the suspension of user activity on the handheld computing device. Optionally, a handheld computing device may sense the presence of a corresponding holster and, responsive to sensing the close proximity of the holster, enter into a user-inactive mode. Entering the user-inactive mode may be defined to include disabling the display.

In one example, the holster is provided with a magnet. The corresponding handheld computing device is provided with a Hall Effect sensor in a position that corresponds, when the handheld computing device is in the holster, to the location of the magnet in the holster. When the handheld computing device is placed in the holster, the magnet is sensed by the Hall Effect sensor and the handheld computing device enters into the user-inactive mode.

Furthermore, the device may enter into the user-inactive mode after a period of inactivity. In addition to the device automatically entering into the user-inactive mode, the user may specifically select a menu item on the device to enter into the user-inactive mode, i.e., to lock the device.

Upon retrieving the mobile device 102 from the holster and finding that the mobile device 102 is locked, the user will typically want to unlock the mobile device 102. Unlocking the mobile device 102 may be as straightforward as using one of the auxiliary I/O devices 206 to cause a dialog to be shown on the display 226. The user may then select an "unlock" menu item on the dialog. In the simplest case, the mobile device 102 simply unlocks responsive to receiving selection of the unlock menu item on the dialog. However, the user may prefer a degree of security and may configure the mobile device 102 to require a password before unlocking.

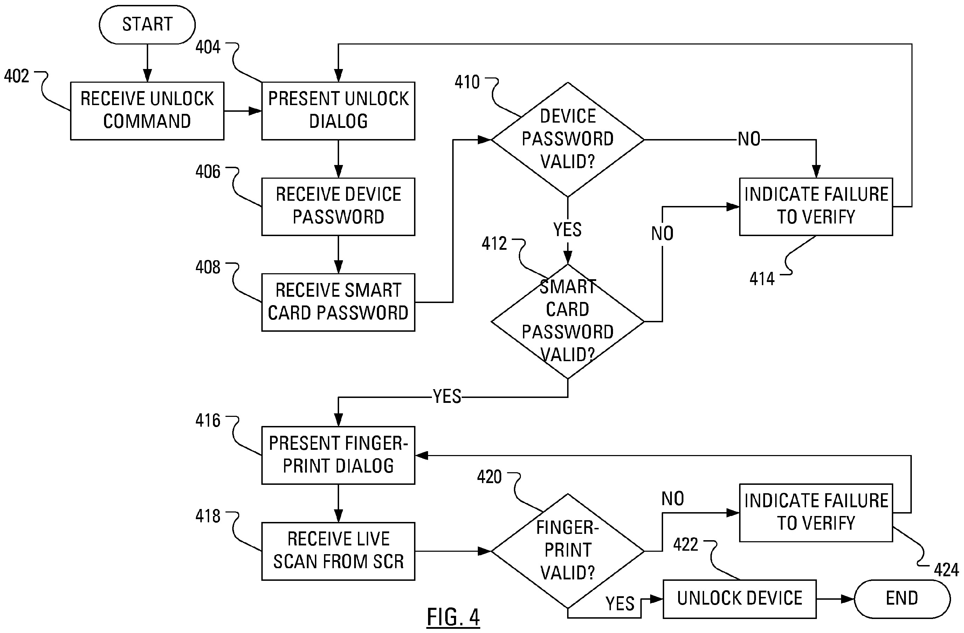

For an even higher degree of security, the user may configure the mobile device 102 to use the smart card reader 110. To unlock the mobile device 102, the user may have to provide a correct device password and a correct smart card password. Even further, biometric authentication may also be required to gain access to the mobile device 102. Steps in an example method of maintaining secure access to the mobile device 102 are illustrated in FIG. 4.

The microprocessor 228 of the mobile device 102 may initially receive (step 402) an "unlock" command, for instance, from the user selecting the unlock menu item from the dialog that is displayed on the mobile device 102 when locked. Responsive to receiving the unlock command, the microprocessor 228 arranges for the presentation of an unlock dialog (step 404) on the display 226 to prompt the user to enter authentication factors, such as a device password and/or a smart card password. Optionally, responsive to being presented with the unlock dialog, the user may enter a device password in a device password field of the unlock dialog and may enter a smart card password in a smart card field of the unlock dialog. The user may, for example, submit the entered information by, for example, actuating an "enter" key on the keyboard 224 or by actuating one of the auxiliary I/O devices 206 to cause a menu to appear on the display 226 and further indicating using the auxiliary I/O device 206 selection of a submit menu item.

Responsive to the submission of the passwords, the microprocessor 228 then receives (step 406) the device password and receives (step 408) the smart card password.

The microprocessor 228 verifies (step 410) the device password. That is, the microprocessor 228 compares the received device password to a stored device password. If a match is found between the two passwords, the microprocessor 228 verifies (step 412) the smart card password. That is, the microprocessor 228 compares the received smart card password to a stored smart card password. If a match is found between the two passwords, the microprocessor 228 presents (step 416) a dialog on the display 226 to prompt the user to provide a fingerprint candidate. The term "fingerprint" is used hereinafter to refer to both the physical print on a finger and the digitally processed biometric candidate that is formed based on a digital image captured by the fingerprint sensor 325. As should be understood by a person of ordinary skill, the fingerprint is used herein as a non-limiting example of biometric data.

If no match is found between the received device password and the stored device password, the microprocessor 228 presents (step 414) a password verification failure dialog and returns to step 404 to present the unlock dialog. Similarly, if no match is found between the received smart card password and the stored smart card password, the microprocessor 228 presents (step 414) the password verification failure dialog and returns to step 404 to present the unlock dialog.

Responsive to being prompted (step 416) to provide a fingerprint, it is expected that the user will provide a fingerprint to the fingerprint sensor 325 (see FIG. 3) on the smart card reader 110. Once the fingerprint sensor 325 has formed a fingerprint candidate from the presented fingerprint, the smart card reader 110 transmits the fingerprint candidate to the mobile device 102 over the communication link between the devices. Notably, there may be security configurations for which smart card-based authentication is unnecessary and wherein a fingerprint sensor (or other biometric input device) is integral to the mobile device 102. Accordingly, responsive to being prompted (step 416) to provide a fingerprint, it would be expected that the user will provide a fingerprint to a fingerprint sensor on the mobile device 102 (configuration not shown).

Upon receiving (step 418) the fingerprint candidate from the smart card reader 110, the microprocessor 228 verifies (step 420) the fingerprint candidate. Notably, receiving (step 418) the fingerprint candidate from the smart card reader 110 may involve the short-range communication subsystem 204 receiving the fingerprint candidate from the smart card reader 110 and the microprocessor 228 receiving the fingerprint candidate from the short-range communication subsystem 204. Alternatively, in an embodiment that may not require the smart card 334 or the smart card reader 110, the microprocessor 228 may receive (step 418) the fingerprint candidate from a fingerprint sensor (not shown) on the mobile device 102. During the verification, if the fingerprint candidate matches a stored fingerprint template associated with unlocking the mobile device 102, the microprocessor 228 unlocks (step 422) the mobile device 102. However, if the fingerprint candidate does not match the stored fingerprint template associated with unlocking the mobile device 102, the microprocessor 228 presents (step 424) a fingerprint verification failure dialog and returns to step 416 to present the prompt to the user to provide a fingerprint.

In overview, a user may associate a specific application with a stored fingerprint template such that the specific application may be launched, if not already executing, on the mobile device 102 responsive to provision of fingerprint to the fingerprint sensor 325 on the smart card reader 110. Indeed, the specific application may be launched pre-loaded with certain data, selection of which data is controlled by the particular fingerprint provided to the fingerprint sensor 325.

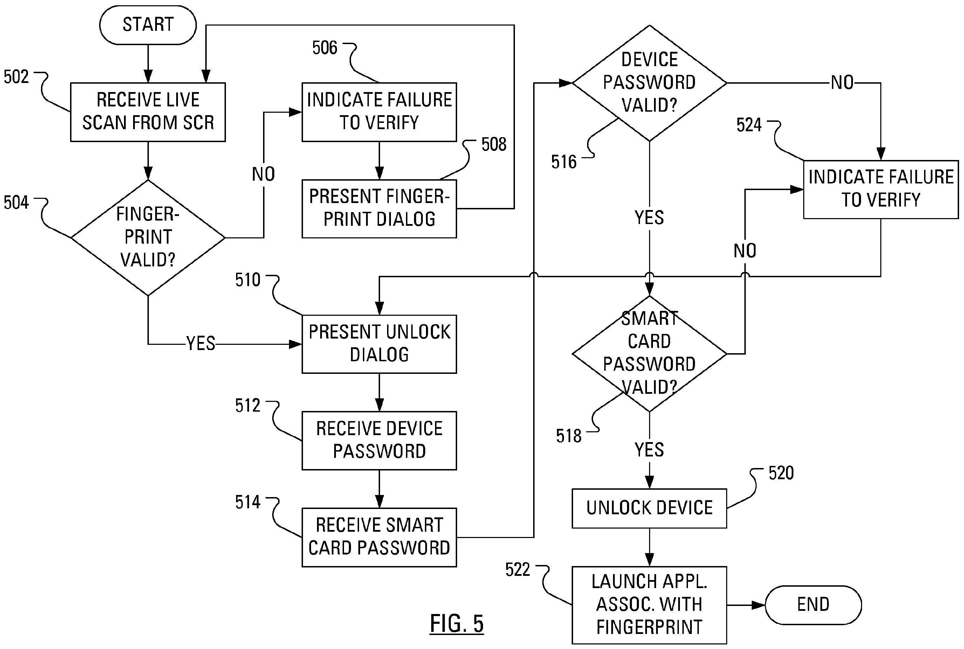

In view of FIG. 5, consider that the mobile device 102 is in a locked state with a previously established pairing with the smart card reader 110. Initially, the user provides a fingerprint to the fingerprint sensor 325 on the smart card reader 110. Upon obtaining a live scan from the fingerprint sensor 325, the microprocessor 310 of the smart card reader 110 processes the live scan to produce a fingerprint candidate and arranges a transfer of the fingerprint candidate to the mobile device 102 using the short-range communication subsystem 320.

Upon receiving (step 502) the fingerprint candidate from the smart card reader 110, the microprocessor 228 verifies (step 504) the fingerprint candidate. Alternatively, in an embodiment that may not require the smart card 334 or the smart card reader 110, the microprocessor 228 may receive (step 502) the fingerprint candidate from a fingerprint sensor (not shown) on the mobile device 102. During the verification, the microprocessor 228 may determine that the fingerprint candidate matches a stored fingerprint template and that the stored fingerprint template is associated with initiating the unlocking of the mobile device 102. The microprocessor 228 may also determine that the fingerprint template is associated with an application. Responsive to determining that the stored fingerprint template is associated with initiating the unlocking of the mobile device 102, the microprocessor 228 arranges the presentation of an unlock dialog (step 510) on the display 226 to prompt the user to enter a device password and a smart card password.

However, if the fingerprint candidate does not match any stored fingerprint templates, the microprocessor 228 arranges (step 506) the presentation of a fingerprint verification failure dialog, arranges (step 508) the presentation of a dialog on the display 226 to prompt the user to provide a fingerprint and returns to step 502.

In one embodiment, responsive to being presented with the unlock dialog, the user will enter a device password in a device password field of the unlock dialog and/or enter a smart card password in a smart card field of the unlock dialog. The user may then submit the entered information by, for example, actuating an "enter" key on the keyboard 224 or by actuating one of the auxiliary I/O devices 206 to cause a menu to appear on the display 226 and further indicating using the auxiliary I/O device 206 selection of a submit menu item.

In an embodiment wherein both passwords are used as authentication factors, responsive to the submission of the passwords, the microprocessor 228 then receives (step 512) the device password and receives (step 514) the smart card password.

Notably, the user may have a limited time (e.g., 30 seconds) to complete provision of the device password and the smart card password before the mobile device 102 reverts to a locked state.

The microprocessor 228 verifies (step 516) the device password. That is, the microprocessor 228 compares the received device password to a stored device password. If a match is found between the two passwords, the microprocessor 228 verifies (step 518) the smart card password. That is, the microprocessor 228 compares the received smart card password to a stored smart card password. If a match is found between the two passwords, the microprocessor 228 unlocks (step 520) the mobile device 102. Alternatively, the microprocessor 228 may transmit the received smart card password to the smart card reader 110 for authentication either by the smart card reader 110 or for authentication by the smart card 334.

Advantageously, it may be that the user has previously configured the mobile device 102 such that the particular fingerprint template associated with initiating the unlocking of the mobile device 102 is also associated with another action including, without limitation, launching an application. In such a case, subsequent to unlocking (step 520) the microprocessor 228 launches (step 522) the associated application.

If no match is found between the received device password and the stored device password, the microprocessor 228 arranges (step 524) the presentation of a password verification failure dialog and returns to step 510 to present the unlock dialog. Similarly, if no match is found between the received smart card password and the stored smart card password, the microprocessor 228 arranges (step 524) the presentation of the password verification failure dialog and returns to step 510 to present the unlock dialog.

It has been discussed hereinbefore that, through the use of convenience keys, execution of specific applications can be launched by a single action (e.g., a key press on the keyboard 224) rather than a series of actions. Similarly, initiating unlocking of the mobile device 102 and the execution of a specific application can be launched in step 522 by a single action, where that action is the provision of a fingerprint to the fingerprint sensor 325 on the smart card reader 110.

The variety available for the application to be associated with the fingerprint template and, accordingly, the application to be launched in step 522 is limited only by the applications resident on the mobile device 102. The fingerprint template formed from a live scan of the right index finger may, for example, be associated with an internet browsing application. Furthermore, the same user finger may produce distinct fingerprint templates based on the manner in which the finger is passed over the fingerprint sensor 325. That is, a top-to-bottom swipe across the fingerprint sensor 325, where the fingerprint sensor 325 is of the bar-shaped type, may produce a fingerprint template distinct from a fingerprint template generated responsive to a bottom-to-top swipe across the fingerprint sensor 325 and may be associated with a distinct action. The pad type of fingerprint sensor 325 does not lend itself to such variation in fingerprint input strategies.

Beyond an association between a particular fingerprint template and a particular application, there may also be an association of specific data to be preloaded into the applications as the application launches. For instance, where the application is an internet browsing application, the application may be configured with specific data in the form of a Uniform Resource Locator (URL) of a particular page. For example, while the fingerprint template associated with the right index finger may be associated with the internet browsing application and an address of the user's home page, the fingerprint template associated with the right thumb print may be associated with the internet browsing application and an address of a weather forecasting page for the user's home city.

In operation, to, for example, obtain a weather forecast when the mobile device 102 is starting in the locked state, the user provides a right thumbprint to the fingerprint sensor 325 on the smart card reader 110 and provides the device password and smart card password when prompted. It is assumed in this example that the stored fingerprint template for right thumbprint is associated with both unlocking the device 102 and launching a browser application pre-loaded with a URL for a desired weather forecast.

Responsive to receiving (step 502) the fingerprint candidate, verifying (step 504) that the fingerprint candidate matches the fingerprint template associated with the right thumb, receiving (step 512) the device password, receiving (step 514) the smart card password, verifying (step 516) the device password and verifying (step 518) the smart card password, the microprocessor 228 unlocks (step 520) the mobile device 102 and launches (step 522) the browser application (see data communications module 230B, FIG. 2) preloaded with the URL for the desired weather forecast. The user need only to wait for the weather page to load and be shown on the display 226.

It should be understood that the right thumb print is only involved in unlocking the device if the fingerprint template associated with the right thumb has previously been associated with the unlock command. If the fingerprint template associated with the right thumb has not been associated with the unlock command and, instead, another fingerprint template has been associated with the unlock command, then the user would first swipe the "unlock" finger to unlock the mobile device 102. Accordingly, for this example, the order of operations would be, from the lock screen, user swipes right thumb, enters device password, enters smart card password and swipes unlock finger. Responsively, the mobile device 102 becomes unlocked and launches the browser application preloaded with the URL for the desired weather forecast.

In a further embodiment, any of the fingers associated with launching an application may automatically be associated with unlocking the mobile device so that the user can just, for example, swipe the right thumb, enter the device password, enter the smart card password and watch as the desired application is automatically launched.

As should be clear to a person of ordinary skill in the art, the order in which various authentication factors are provided by the user should not be considered to be limited to the order in which the authentication factors are provided in the example embodiments presented herein. Indeed, many embodiments will only require a subset of the authentication factors discussed in this application.

Alternatively, where the mobile device 102 includes mobile telephone capabilities, specific fingerprint templates may be associated with the launch (in step 522) of a telephone application (see voice communications module 230A, FIG. 2). Again, specific data, this time, telephone directory numbers, may be associated with particular fingerprint templates. A fingerprint template associated with the user's left thumb may be associated with the telephone application and the user's home telephone directory number. In one embodiment, a particular fingerprint template may be associated with the most recently called directory number, whatever that directory number may be.

In operation, to, for example, place a call to the user's home telephone directory number when the mobile device 102 is starting in the locked state, the user provides a left thumbprint to the fingerprint sensor 325 on the smart card reader 110 and provides the device password and smart card password when prompted. It is assumed in this example that the stored fingerprint template for the left thumbprint is associated with both unlocking the device 102 and launching a telephone application pre-loaded with the user's home telephone directory number.

Responsive to receiving (step 502) the fingerprint candidate, verifying (step 504) that the fingerprint candidate matches a fingerprint template associated with the left thumb, receiving (step 512) the device password, receiving (step 514) the smart card password, verifying (step 516) the device password and verifying (step 518) the smart card password, the microprocessor 228 unlocks (step 520) the mobile device 102 and initiates (step 522) a telephone call to the user's home telephone directory number.

Further alternatively, where the mobile device 102 includes electronic messaging capabilities, specific fingerprints may be associated with the launch (in step 522) of, for one example, an e-mail message composition application or, for another example, a Short Messaging Service (SMS) message composition application. Again, specific data, this time, e-mail addresses or mobile telephone directory numbers, may be associated with particular fingerprint templates. A fingerprint template associated with the user's left ring finger may be associated with the e-mail message composition application and an e-mail address for the user's supervisor.

In operation, to, for example, send an e-mail message to the supervisor when the mobile device 102 is starting in the locked state, the user provides a left ring finger fingerprint to the fingerprint sensor 325 on the smart card reader 110 and provides the device password and smart card password when prompted. It is assumed in this example that the stored fingerprint template for the left ring finger is associated with both unlocking the device 102 and launching an e-mail application pre-loaded with the user's supervisor's e-mail address.

Responsive to receiving (step 502) the fingerprint candidate, verifying (step 504) that the fingerprint candidate matches a fingerprint template associated with the left ring finger, receiving (step 512) the device password, receiving (step 514) the smart card password, verifying (step 516) the device password and verifying (step 518) the smart card password, the microprocessor 228 unlocks (step 520) the mobile device 102 and launches (step 522) the e-mail message composition application, which application presents an e-mail composition screen on the display 226 with the e-mail address for the supervisor pre-loaded in the "To:" field. The user may then fill in the subject field and the body field and interact with the e-mail message composition application to initiate the transmission of the e-mail message.

Other example actions with corresponding applications that may be launched by way of embodiments of this application may include: the capturing of a digital photograph in a cameral application; the determination and display of a current location in a mapping application; and the playing of an audio file or video file in a media player application.

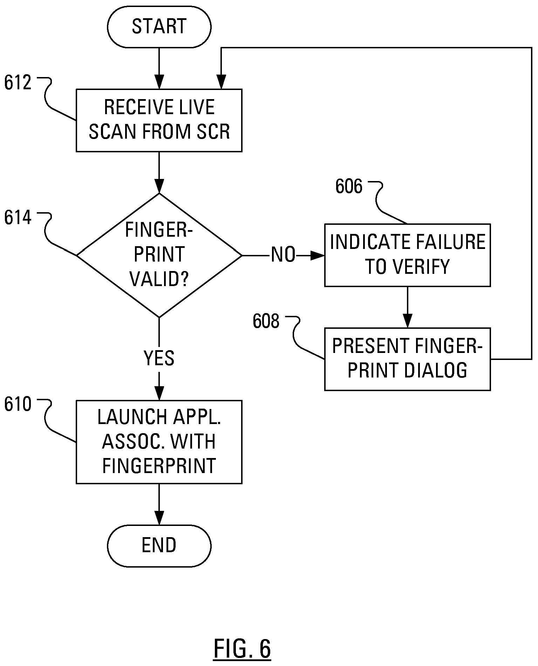

There may be cases in which the mobile device 102 need not be unlocked to execute an application. In view of FIG. 6, consider that the mobile device 102 is in a locked state with a previously established pairing with the smart card reader 110. Initially, the user provides a fingerprint to the fingerprint sensor 325 on the smart card reader 110. Upon obtaining a live scan from the fingerprint sensor 325, the microprocessor 310 of the smart card reader 110 processes the live scan to form a fingerprint candidate and arranges a transfer of the fingerprint candidate to the mobile device 102 using the short-range communication subsystem 320.

Upon receiving (step 602) the fingerprint candidate from the smart card reader 110, the mobile device 102 verifies (step 604) the fingerprint candidate. During the verification, the microprocessor 228 may determine that the fingerprint candidate matches a fingerprint template and that the stored fingerprint template is associated with an application. Responsive to determining that the stored fingerprint template is associated with an application, the microprocessor 228 launches (step 610) the associated application.

However, if the fingerprint candidate does not match any fingerprint templates, the mobile device 102 presents (step 606) a fingerprint verification failure dialog, presents (step 608) a dialog on the display 226 to prompt the user to provide a fingerprint and returns to step 602.

In some embodiments, the applications selected for implementation using the method illustrated in FIG. 6 may be those that pose the lowest security risk to the mobile device 102. Indeed the mobile device 102 remains locked while executing the application. The telephone application is an example of a secure application that may be executed without verification of the device password and verification of the smart card password.

In operation, to place a call to the user's home telephone directory number when the mobile device 102 is starting in the locked state, the user provides a left thumbprint to the fingerprint sensor 325 on the smart card reader 110. Responsive to receiving (step 602) the fingerprint candidate and verifying (step 604) that the fingerprint candidate matches a fingerprint template associated with the left thumb, the mobile device 102 takes an action distinct from unlocking. The action may involve, without limitation, launching (step 610), if not already running, the telephone application and initiating a telephone call to the user's home telephone directory number.

Additionally, access to a notification profile change menu while the mobile device 102 is locked may be deemed not to be a security risk. To change the notification profile for the mobile device 102, then, the user provides a fingerprint to the fingerprint sensor 325 on the smart card reader 110 and, upon verification, the mobile device 102 provides the notification profile change menu on the display 226. Responsive to viewing the menu on the mobile device, the user may select one of the predetermined user profiles. It may further be that, in configuring the mobile device, the user has associated a particular fingerprint template with the most oft used notification profiles. For example, the fingerprint template associated with the right ring finger may be associated with a "Quiet" profile, for which no sounds or vibrations occur, and the fingerprint template associated with the right middle finger may be associated with a "Normal" profile.

In operation, the mobile device 102 may be in a locked state with a previously established pairing with the smart card reader 110. The user provides the fingerprint from the right ring finger. Responsive to receiving (step 602) the fingerprint candidate and verifying (step 604) that the fingerprint candidate matches the fingerprint template associated with the right ring finger, the mobile device 102 changes (step 610) the notification profile to the "Quiet" profile.

As will be clear to a person of ordinary skill in the art, while a fingerprint has been used as an example element of biometric data, other elements of biometric data may equally be used. However, there are downsides to for instance, using retinal scans instead of fingerprints. One disadvantage being that only two (one per eye) applications can be associated with retinal scans, where ten or more applications can be respectively associated with fingerprints.

Additionally, while the preceding has concentrated on implementation on a mobile communication device (mobile device 102), it should be clear to a person of ordinary skill that computing devices of other sizes and form factors also exist with security measures that involve a biometric input device. Accordingly, the subject matter described above could equally be applied to desktop computers and notebook computers, for example.

Furthermore, it should be clear to a person of ordinary skill that the biometric input device may be implemented in hardware on the device launching the applications. That is, the smart card reader 110 with integral biometric information input device 325 is optional if the mobile device 102 has a biometric information input device 325.

The above-described embodiments of the present application are intended to be examples only. Alterations, modifications and variations may be effected to the particular embodiments by those skilled in the art without departing from the scope of the application, which is defined by the claims appended hereto.

Aspects of the invention are described in the following numbered clauses (these are not claims):
1. A method of launching applications on a computing apparatus (102), said method comprising:
   receiving a biometric candidate;
   determining that said biometric candidate matches a stored biometric template and that said stored biometric template is associated with an application;
   determining that said stored biometric template is associated with unlocking said computing apparatus;
   unlocking said computing apparatus; and
   launching execution of said application.
2. The method of clause 1 wherein said biometric candidate comprises a fingerprint candidate and wherein said stored biometric template comprises a stored fingerprint template.
3. The method of clause 1 or clause 2 wherein said stored biometric template is associated with data for loading into said application upon launching said application.
4. The method of clause 3 wherein: said application comprises a web browsing application and said data comprises a Uniform Resource Locator; or said application comprises a telephone application and said data comprises a directory number; or said application comprises an electronic message composition application and said data comprises an e-mail address; or said application comprises a Short Message Service message composition application and said data comprises a directory number.
5. The method of any one of clauses 1 to 4 wherein said receiving said biometric candidate comprises receiving said biometric candidate from a peripheral device.
6. The method of clause 5 wherein said peripheral device comprises a smart card reader.
7. The method of clause 5 further comprising:
   presenting an unlock dialog;
   receiving a candidate device password, wherein said device password is associated with said computing apparatus; and
   determining that said candidate device password matches a stored device password.
8. The method of clause 7 further comprising only unlocking said computing apparatus subsequent to:
   receiving a candidate smart card password, wherein said smart card password is associated with a smart card communicably coupled to said peripheral device; and
   determining that said candidate smart card password matches a stored smart card password.
9. A computing apparatus (102) comprising:
   a processor (228);
   a memory (216, 218) for storing:
      executable code for an application to be launched by said processor; and
      a biometric template;
   said processor (228) being adapted to execute code for causing said computing apparatus (102) to implement the steps of the method of any one of claims 1 to 8.
10. The computing apparatus of clause 9 further comprising a short-range communication subsystem (204) adapted to receive said biometric candidate from a peripheral device (110) and pass said biometric candidate to said processor (228).
11. The computing apparatus of clause 10 wherein said peripheral device comprises a smart card reader (110).
12. The computing apparatus of clause 9 further comprising a biometric input device (325) adapted to receive said biometric candidate and pass said biometric candidate to said processor (228).
13. The computing apparatus of clause 12 wherein said biometric input device comprises a fingerprint sensor (325) and wherein said stored biometric template comprises a stored fingerprint template.
14. A computer readable medium (216, 218) containing computer-executable instructions that, when performed by a processor (228), cause said processor to perform the steps of the method of any one of clauses 1 to 8.

## Claims

1. A method of launching applications on a computing apparatus (102) whilst the apparatus is in a locked state, the method comprising:
receiving (612) a biometric candidate from a user;
determining (614) that the biometric candidate matches one of a plurality of stored biometric templates for the user, each stored biometric template being associated with launching execution of a different application (328);
determining that the biometric template is associated with an application that poses a low security risk;
launching (610), without requiring additional user input, execution of the application associated with the biometric template without unlocking the device.

2. The method of claim 1 wherein the biometric candidate comprises a fingerprint candidate and wherein the stored biometric template comprises a stored fingerprint template.

3. The method of claim 2 wherein the stored biometric template is associated with data for loading into the application (328) upon launching the application (328).

4. The method of claim 3 wherein: the application (328) comprises a telephone application and the data comprises a directory number; or the application comprises a notification profile change menu and the data comprises a notification profile.

5. The method of claim 2 wherein the fingerprint candidate is received responsive to a swipe across a fingerprint sensor in a swipe direction.

6. The method of claim 5 wherein the biometric candidate is received in a single action.

7. The method of claim 6 wherein the swipe direction comprises:
a bottom-to-top swipe direction; or
a top-to-bottom swipe direction.

8. The method of any one of claims 1 to 7 wherein the receiving the biometric candidate comprises receiving the biometric candidate from a peripheral device.

9. The method of claim 8 wherein the peripheral device comprises a smart card reader.

10. The method of claim 1 wherein the biometric candidate and biometric template are any of eye retina, iris, or facial pattern.

11. The method of claim 1 wherein the application is executed without verification of a device password and a smart card password.

12. A computing apparatus (102) comprising:
a processor (228);
a memory (216, 218) for storing:
executable code for an application to be launched by the processor (228); and
a biometric template;
the processor (228) being adapted to execute code for causing the computing apparatus (102) to implement the steps of the method of any one of claims 1 to 11.

13. The computing apparatus (102) of claim 12 further comprising a communication subsystem (204) adapted to receive the biometric candidate from a peripheral device (110) and pass the biometric candidate to the processor (228).

14. The computing apparatus (102) of claim 12 further comprising a biometric input device (325) adapted to receive the biometric candidate and pass the biometric candidate to the processor (228).

15. A computer readable medium (216, 218) containing computer-executable instructions that, when performed by a processor (228), cause the processor (228) to perform the steps of the method of any one of claims 1 to 11.

## Patentansprüche

1. Verfahren zum Starten von Anwendungen auf einer Rechnervorrichtung (102), während sich die Vorrichtung in einem verriegelten Zustand befindet, wobei das Verfahren umfasst:
das Empfangen (612) eines biometrischen Kandidaten von einem Benutzer;
das Ermitteln (614), dass der biometrische Kandidat mit einer von einer Vielzahl von gespeicherten biometrischen Vorlagen für den Benutzer übereinstimmt, wobei jede gespeicherte biometrische Vorlage mit dem Starten des Ausführens einer anderen Anwendung (328) verknüpft ist;
das Ermitteln, dass die biometrische Vorlage mit einer Anwendung verknüpft ist, die ein geringes Sicherheitsrisiko birgt;
das Starten (610) des Ausführens der mit der biometrischen Vorlage verknüpften Anwendung, ohne eine zusätzliche Benutzereingabe zu erfordern, ohne Entriegeln der Vorrichtung.

2. Verfahren nach Anspruch 1, wobei der biometrische Kandidat einen Fingerabdruckkandidaten umfasst und wobei die gespeicherte biometrische Vorlage eine gespeicherte Fingerabdruckvorlage umfasst.

3. Verfahren nach Anspruch 2, wobei die gespeicherte biometrische Vorlage mit Daten zum Laden in die Anwendung (328) bei Starten der Anwendung (328) verknüpft ist.

4. Verfahren nach Anspruch 3, wobei: die Anwendung (328) eine Telefonanwendung umfasst und die Daten eine Verzeichnisnummer umfassen; oder die Anwendung ein Benachrichtigungsprofil-Änderungsmenü umfasst und die Daten ein Benachrichtigungsprofil umfassen.

5. Verfahren nach Anspruch 2, wobei der Fingerabdruckkandidat als Reaktion auf ein Wischen über einen Fingerabdrucksensor in einer Wischrichtung empfangen wird.

6. Verfahren nach Anspruch 5, wobei der biometrische Kandidat in einer einzelnen Aktion empfangen wird.

7. Verfahren nach Anspruch 6, wobei die Wischrichtung umfasst:
eine Wischrichtung von unten nach oben; oder
eine Wischrichtung von oben nach unten.

8. Verfahren nach einem der Ansprüche 1 bis 7, wobei das Empfangen des biometrischen Kandidaten das Empfangen des biometrischen Kandidaten von einem Peripheriegerät umfasst.

9. Verfahren nach Anspruch 8, wobei das Peripheriegerät einen Smartcard-Leser umfasst.

10. Verfahren nach Anspruch 1, wobei der biometrische Kandidat und die biometrische Vorlage ein Augennetzhaut-, Iris- oder Gesichtsmuster sind.

11. Verfahren nach Anspruch 1, wobei die Anwendung ohne Prüfen eines Gerätepassworts und eines Smartcard-Passworts ausgeführt wird.

12. Rechnervorrichtung (102) umfassend:
einen Prozessor (228);
einen Speicher (216, 218) zum Speichern:
von ausführbarem Code für eine vom Prozessor (228) zu startende Anwendung; und
einer biometrischen Vorlage;
wobei der Prozessor (228) zum Ausführen von Code zum Veranlassen der Rechnervorrichtung (102) zum Ausführen der Schritte des Verfahrens nach einem der Ansprüche 1 bis 11 ausgebildet ist.

13. Rechnervorrichtung (102) nach Anspruch 12 ferner umfassend ein zum Empfangen des biometrischen Kandidaten von einem Peripheriegerät (110) und Übergeben des biometrischen Kandidaten an den Prozessor (228) ausgebildetes Kommunikationsteilsystem (204).

14. Rechnervorrichtung (102) nach Anspruch 12 ferner umfassend eine zum Empfangen des biometrischen Kandidaten und Übergeben des biometrischen Kandidaten an den Prozessor (228) ausgebildete biometrische Eingabevorrichtung (325).

15. Computerlesbares Medium (216, 218) umfassend computerausführbare Anweisungen, die bei Ausführung durch einen Prozessor (228) den Prozessor (228) zum Ausführen der Schritte des Verfahrens von einem der Ansprüche 1 bis 11 veranlassen.

## Revendications

1. Procédé de lancement d'applications sur un appareil informatique (102) même si l'appareil est dans un état verrouillé, le procédé comprenant le fait :
de recevoir (612) un candidat biométrique à partir d'un utilisateur ;
de déterminer (614) que le candidat biométrique correspond à l'un d'une pluralité de modèles biométriques stockés pour l'utilisateur, chaque modèle biométrique stocké étant associé au lancement de l'exécution d'une application différente (328) ;
de déterminer que le modèle biométrique est associé à une application présentant un faible risque de sécurité ;
de lancer (610), sans nécessiter une entrée d'utilisateur supplémentaire, l'exécution de l'application associée au modèle biométrique sans déverrouiller le dispositif.

2. Procédé de la revendication 1, dans lequel le candidat biométrique comprend un candidat d'empreinte digitale et dans lequel le modèle biométrique stocké comprend un modèle d'empreinte digitale stocké.

3. Procédé de la revendication 2 dans lequel le modèle biométrique stocké est associé à des données à charger dans l'application (328) lors du lancement de l'application (328).

4. Procédé de la revendication 3 dans lequel :
l'application (328) comprend une application téléphonique et les données comprennent un numéro d'appel ; ou
l'application comprend un menu de changement de profil de notification et les données comprennent un profil de notification.

5. Procédé de la revendication 2, dans lequel le candidat d'empreinte digitale est reçu en réponse à un glissement à travers un capteur d'empreinte digitale dans une direction de glissement.

6. Procédé de la revendication 5, dans lequel le candidat biométrique est reçu en une seule action.

7. Procédé de la revendication 6 dans lequel la direction de glissement comprend :
une direction de glissement du bas vers le haut ; ou
une direction de glissement du haut vers le bas.

8. Procédé de l'une quelconque des revendications 1 à 7, dans lequel la réception du candidat biométrique comprend le fait de recevoir le candidat biométrique à partir d'un dispositif périphérique.

9. Procédé de la revendication 8 dans lequel le dispositif périphérique comprend un lecteur de carte à puce.

10. Procédé de la revendication 1, dans lequel le candidat biométrique et le modèle biométrique sont l'un(e) quelconque de la rétine de l'oeil, de l'iris ou du motif facial.

11. Procédé de la revendication 1 dans lequel l'application est exécutée sans vérification d'un mot de passe de dispositif et d'un mot de passe de carte à puce.

12. Appareil informatique (102) comprenant :
un processeur (228) ;
une mémoire (216, 218) pour stocker :
un code pouvant être exécuté pour une application à lancer par le processeur (228) ; et
un modèle biométrique ;
le processeur (228) étant adapté pour exécuter un code afin d'amener l'appareil informatique (102) à mettre en oeuvre les étapes du procédé de l'une quelconque des revendications 1 à 11.

13. Appareil informatique (102) de la revendication 12, comprenant en outre un sous-système de communication (204) adapté pour recevoir le candidat biométrique à partir d'un dispositif périphérique (110) et faire passer le candidat biométrique au processeur (228).

14. Appareil informatique (102) de la revendication 12, comprenant en outre un dispositif d'entrée biométrique (325) adapté pour recevoir le candidat biométrique et faire passer le candidat biométrique au processeur (228).

15. Support lisible par ordinateur (216, 218) contenant des instructions exécutables par ordinateur qui, lorsqu'elles sont exécutées par un processeur (228), amènent le processeur (228) à effectuer les étapes du procédé de l'une quelconque des revendications 1 à 11.
